## Europäisches Patentamt
## European Patent Office
## Office européen des brevets

(19)

(11) Publication number: **0 013 569**
**B2**

(12) # NEW EUROPEAN PATENT SPECIFICATION

(45) Date of publication of the new patent specification:
13.01.88

(51) Int. Cl.⁴: **C 09 K 5/06**

(21) Application number: 80100069.4

(22) Date of filling: 09.01.80

(54) Hydrated calcium-chloride reversible phase change compositions with nucleating additives.

(30) Priority: 12.01.79 US 2828

(43) Date of publication of application:
23.07.80 Bulletin 80/15

(45) Publication of the grant of the patent:
23.06.82 Bulletin 82/25

(45) Mention of the opposition decision:
13.01.88 Bulletin 88/2

(84) Designated Contracting States:
BE CH DE FR GB IT NL SE

(56) References cited:
DE-A-2 550 106
GB-A-2 001 096

VDI-Bericht No. 288, 1977, "Latentspeicher"
Bo Carlson et al., "Heat-of-fusion storage-sytems
for short-term storage of solar heat", SEAS
International Conference, Stockholm 1978
Schneider, M. et al., "Conception de chauffage
solaire en domaine méditerranéen", Résumés des
communications aux journées internationales
d'étude sur le chauffage solaire dans le bâtiment.
Liege, September 1977
CHEMICAL ABSTRACTS, vol. 88 (1978), p. 122, ref.
138621b, Columbus Ohio (US)
CHEMICAL ABSTRACTS, vol. 86 (1977), p. 182, ref.
19533y, Columbus Ohio (US)

The file contains technical information submitted
after the application was filed and not included in

(73) Proprietor: THE DOW CHEMICAL COMPANY, 2030
Dow Center Abbott Road P.O. Box 1967,
Midland, MI 48640 (US)

(72) Inventor: Lane, George Ashel, 3802 Wintergreen
Drive, Midland, Michigan (US)
Inventor: Rossow, Harold Everett, 2888 Poseyville
Road, Midland, Michigan (US)

(74) Representative: Hann, Michael, Dr., Patentanwälte
Dr. Michael Hann Dr. H.- G. Sternagel Sander
Aue 30, D-5060 Bergisch Gladbach 2 (DE)

(56) References cited: (continuation)
this specification

EP 0 013 569 B2

LIBER, STOCKHOLM 1988

## Description

<u>Hydrated calcium-chloride reversible phase change compositions with nucleating additives.</u>

The invention relates to reversible liquid/solid phase change compositions. More particularly, the invention relates to hydrated calcium chloride phase change compositions containing an additive to modify the supercooling properties of the $CaCl_2$ liquid phase.

Calcium chloride hexahydrate is in many respects suited for use as a latent heat storage medium. The material in substantially pure form undergoes a liquid/solid phase transition at about 27°C-30°C (about 81°F-86°F) releasing or alternately absorbing about 192 Joules per gram (the latent heat of fusion). The material has particularly been considered for use as an encapsulated heat storage medium for use in solar energy space heating applications. Specific embodiments of such applications, for example, are taught in Report Nos. NSF/RANN/SE/C906/FR/76 1; NSF/RANN/SE/C906/TR/75 1; and ORO-5217-8, all of which are available from the National Technical Information Service, Springfield, Virginia. In order to improve the material for such applications, however, additives or a series of additives have been proposed which are effective to modify the supercooling properties of hydrated calcium chloride compositions, and which are effective in small amounts such as not to alter the advantageous heat storage properties of the material. Representative of such additives can be found in SU-A-568 669; JA-A-53-19183; 51-76183; 51-70193; 53-070 989 and 78-009 596 and DE-A-2 550 106.

"Hydrated calcium chloride" means reversible liquid/solid phase change compositions containing from between about 40 to 54 weight percent calcium chloride (on an anhydrous basis), and which apart from the additives hereof, are susceptible to supercooling.

"Supercooling" refers to an inherent discrepancy between the temperature at which freezing initiates and the thawing temperature of a given hydrated calcium chloride composition, when cooled and heated under quiet conditions.

"Additive(s)" includes, in addition to the nucleating additives specified herein, precursors of such additives nondetrimental to the purposes of the invention.

The invention is the discovery of a new highly active nucleating additive for hydrated calcium chloride compositions. The invention particularly is a reversible liquid/solid phase change composition comprising calcium chloride with water in a ratio to prepare a hydrated calcium chloride phase change composition. and which includes as an additive to such composition $BaI_2$, added in an amount of from 0,005 to 2,0 weight percent to suppress the supercooling properties of the calcium chloride liquid phase 2°C or less taken on an averaging basis over repeated cycles.

Isomorphous nucleators act to reduce supercooling by providing crystallization nuclei of the same crystal habit and approximately the same lattice spacing as the compound being nucleated. Calcium chloride hexahydrate crystals normally have a hexagonal structure, with an "a" axis of 7.9 angstrom units and a "c" axis of 3.9 angstroms. Although nucleation can be obtained with $SrCl_2 \cdot 6H_2O$ and $SrBr_2 \cdot 6H_2O$, which crystallize in the hexagonal system, it has surprisingly been discovered that $BaI_2$, which in aqueous media normally exists as the hexahydrate (which has the hexagonal crystal structure), is also a good nucleator for $CaCl_2 \cdot 6H_2O$. From Table I, it will be noted that the effectiveness of nucleator cannot be determined from the crystal habit of the compounds.

### Table I

| Compound | Crystal System | "a" Axis Å | "c" Axis Å | c/a |
|---|---|---|---|---|
| 1. $CaCl_2 \cdot 6H_2O$ | Hexagonal | 7.9 | 3.9 | 0.49 |
| 2. $SrCl_2 \cdot 6H_2O$ | Hexagonal | 7.9 | 4.1 | 0.52 |
| 3. $SrBr_2 \cdot 6H_2O$ | Hexagonal | 8.2 | 4.2 | 0.51 |
| 4. $BaI_2 \cdot 6H_2O$ | Hexagonal | 8.9 | 4.6 | 0.52 |

To compare the effectiveness of these isomorphous nucleators, 0.5 % by weight of each of the three additives was added to $CaCl_2 \cdot 6H_2O$, and the mixture subjected to repetitive freeze-thaw cycles. The sample containing $SrBr_2$ showed no supercooling for were cycles, but for the next five cycles the nucleator lost effectiveness and supercooling persisted. When the amount of $SrBr_2 \cdot 6H_2O$ was doubled (1.0 %) the additive was effective, and twelve cycles without supercooling were obtained (at which point the experiment was terminated). $SrCl_2$ seemed somewhat more effective, in that ten cycles were observed without supercooling, before the additive lost effectiveness and five cycles with supercooling occurred. Doubling the level to 1.0 % again proved effective (12) cycles with no supercooling). Barium iodide proved to be the most effective in these tests, however, in that 20 cycles were obtained with no supercooling (at which point the experiment was terminated), and it was not necessary to double the nucleator level to achieve effectiveness. $BaI_2$ was found to be the most effective of the isomorphous nucleators tested.

Epitaxial nucleators are often also effective in reducing supercooling during crystallization. The exact manner of nucleation, however, is in each case unknown or the subject of speculation. In the present invention, nucleators of this category, several of which are aqueous bases, and a few of which are approximately neutral in hydrous solution, where found to be effective.

The effective amount of the additive is determined by testing a given composition over repetitive phase change cycles. Generally, a beneficial effect can be shown with as little as 0.005 weight percent of an additive in the composition, and there is generally no further benefit achieved after about 2.0 weight percent of additive is incorporated into the composition.

The compositions hereof are ideally packaged in individual encapsulating means for use in conjunction with solar heating systems. Exemplary of suitable and known encapsulating means for the heat storage compositions hereof are water impervious foils of plastic/metal laminates. Also, closed cell plastic foams have been suggested in which the heat storage composition may be encapsulated within the cells of the foam structure, as illustrated, for example, in USA-A-4 003 426. Yet other useful encapsulating means are metal or plastic cans, such as inexpensive aerosol cans; and metal or plastic pipe, such as extruded polyethylene pipe. Further details respecting such encapsulating means are given in the Report Nos. ORO/5217-8 and NSF RANN SE C906 FR 76 1.

**Example**

The data of the table below are generated by preparing hydrated calcium chloride samples of analytical grade components, according to the ratios indicated, and wherein the mixed samples of each specified ratio are placed into a two-ounce glass vial, which is then heated to 50°C under agitation to achieve a uniform dispersion or admixture. A glass-encased thermocouple is inserted through the cap of each vial to measure temperature changes at the center of each sample prior to, during and after freezing. The cooling temperature is controlled and maintained within the range of about 10°C-15°C. Sample No. 1, is a control sample of analytical grade $CaCl_2$, and since supercooling tendencies prevented the control sample from freezing within the indicated cooling temperature range, further tests at 0°C are given in the table with respect to this material.

**Table II**

| Sample | Additive | Test Cycle #'s | Freeze Initiation Temperature °C | Freeze Plateau °C | Supercooling °C |
|---|---|---|---|---|---|
| 1  30.4 g $CaCl_2$ | none | 1 @ 12°C | -- | No freezing | -- |
|  + |  | 2 @ 0°C | 3 | Partial freezing | -- |
| 29.6 g $H_2O$ |  | 3 @ 0°C | 2 | 25°C | 23 |
| 2  30.4 g $CaCl_2$ | 0.3 g $BaI_2$ | 1--20 | 27.5--29 | 26--28 | none |
|  + |  |  |  |  |  |
| 29.6 g $H_2O$ |  |  |  |  |  |

Referring to the table, the high activity in small amounts of the defined additive is particularly pronounced in comparison with the control sample. Thus, in two of the tests relating to the control, one at the lower temperature of 0°C, super cooling is not overcome and no complete freezing of the material is thus observed. In a third test, also at the lower temperature of 0°C, complete freezing is accomplished, but only with excessive supercooling of the control composition. In contrast, the small amount of the additive of the invention, where present, change the character of the control such that supercooling is essentially close to elimination or is eliminated entirely.

**Claims**

1. A reversible liquid/solid phase change composition comprising hydrated $CaCl_2$ and a nucleating additive, characterized in that, $BaI_2$ is added to the composition in an amount of from 0,005 to 2,0 weight % to suppress supercooling of hydrated $CaCl_2$ liquid phase to 2°C or less.

2. The reversible liquid/solid phase change composition of claim 1, characterized in that, the phase change composition comprises 40 to 54 weight percent $CaCl_2$ (on an anhydrous basis).

**Patentansprüche**

1. Zusammensetzung, deren Phasenzustand reversibel zwischen fest und flüssig umkehrbar ist, die Calciumchlorid-Hydrat und einen die Kristallisation fördernden Zusatz enthält, dadurch gekennzeichnet, daß der Zusammensetzung $BaI_2$ in einer Menge von 0,005 bis 2,0 Gewichts % zugesetzt ist, um Unterkühlung der flüssigen Phase des Calziumchlorid-Hydrats auf 2°C oder weniger zu verringern.

2. Zusammensetzung deren Phasenzustand reversibel zwischen fest und flüssig umkehrbar ist, <u>dadurch gekennzeichnet, daß</u> die die Phase ändernde Zusammensetzung 40 bis 54 Gewichts % CaCl₂ (auf wasserfreier Basis) enthält.

**Revendications**

Composition de changement de phase réversible liquide/solide, comprenant du CaCl₂ hydraté et un additif de nucléation, caractérisée par le fait que l'on ajoute à la composition du BaI₂ en une quantité comprise entre 0,005 et 2,0 % en poids, pour supprimer la surfusion de la phase liquide de CaCl₂ hydraté jusqu'à 2°C ou moins.

2. Composition de changement de phase réversible liquide/solide selon la revendication 1, caractérisée en ce que la composition de changement de phase comprend 40 à 54 % en poids de CaCl₂ (sur une base anhydre).